# EUROPÄISCHE PATENTSCHRIFT

(11) **EP 3 774 170 B1**
(45) Veröffentlichungstag und Bekanntmachung des Hinweises auf die Patenterteilung: **28.02.2024**
(21) Anmeldenummer: 19714155.9
(22) Anmeldetag: 25.03.2019
(51) Int. Cl.: B23K 37/04, B23K 26/38, B23K 26/70

(54) **LASERBEARBEITUNGSAUFLAGE UND VERFAHREN ZUM BEARBEITEN EINES WERKSTÜCKES MITTELS LASERSTRAHLUNG**
LASER PROCESSING INSTALLATION AND METHOD FOR PROCESSING A WORKPIECE BY MEANS OF LASER RADIATION
INSTALLATION D'USINAGE LASER ET PROCÉDÉ D'USINAGE D'UNE PIÈCE AU MOYEN D'UN RAYONNEMENT LASER

(30) Priorität: 27.03.2018 DE 102018107311
(43) Veröffentlichungstag der Anmeldung: 17.02.2021
(73) Patentinhaber: GFH GmbH, 94469 Deggendorf (DE)
(72) Erfinder: LANG, Thomas, 94551 Lalling (DE)
(74) Vertreter: Wolf, Gerhard
(86) Internationale Anmeldenummer: PCT/EP2019/057365
(87) Internationale Veröffentlichungsnummer: WO 2019/185504

(56) Entgegenhaltungen:
- EP-A1- 3 127 650
- KR-A- 20100 047 923

## Beschreibung

Die Erfindung betrifft eine Vorrichtung und ein Verfahren zur Bearbeitung, beispielsweise zum Bohren, Schneiden oder Abtragen von Material eines Materialstücks mittels Laserstrahlung. Insbesondere betrifft die Erfindung eine Laserbearbeitungsauflage und ein Verfahren zum Bearbeiten eines Materialstücks basierend auf einer solchen Laserbearbeitungsauflage.

Im Bereich des Laserschneidens sind Laserschneidauflagen bekannt, die eine Oberflächenkonturierung zur Ausbildung von punkt- oder linienförmigen Auflagestellen aufweisen. Die Oberflächenkonturierung kann beispielsweise sägezahnartig ausgebildet sein. Auf dieser Oberflächenkonturierung wird dann ein Materialstück aufgelegt bzw. aufgespannt, das anschließend durch Einwirkung eines Laserstrahls eines Laserbearbeitungswerkzeugs bearbeitet wird. Die Bearbeitung kann beispielsweise ein Bohren oder Schneiden des Materialstücks sein.

Bei der Herstellung von Miniaturwerkstücken mit filigranen Konturen, wie sie beispielsweise in der Uhrenindustrie verwendet werden, treten mit den bekannten Laserschneidauflagen erhebliche Probleme auf. Zum einen sind die Auflagebereiche bei konturierten Laserschneidauflagen zu gering, um eine sichere Lagerung des Werkstücks zu gewährleisten. Zum anderen sind bekannte Schneidauflagen bereits nach wenigen Schneidvorgängen verschlissen. Auch hinterlassen die Auflagepunkte auf konturierten Laserschneidauflagen Beschädigungen an den Werkstücken, die diese ggf. unbrauchbar machen. Zuletzt gestaltet sich die Abfuhr des Prozessgases schwierig, da es teilweise lange Wege zurücklegen muss und es schwierig abzusaugen ist, da es in viele Richtungen geblasen wird. Die Druckschrift KR 10 2010 004 7923A offenbart eine Laserbearbeitungsauflage für Flachmaterialien, beispielsweis Paneele für Touch-Panels.

Die Druckschrift EP 3127 650 A1 offenbart eine mehrteilig ausgebildete Laserschneidauflage mit einem aus einem porösen Material gebildeten Element, auf das das zu schneidende Werkstück aufgelegt wird. Ausgehend hiervon ist es Aufgabe der Erfindung, eine Laserbearbeitungsauflage anzugeben, die selbst bei der Herstellung filigraner Werkstücke eine effektive Fixierung derselben ermöglicht und eine hinreichend gute Abführung des bei dem Laserbearbeitungsprozess eingesetzten Prozessgases ermöglicht.

Die Aufgabe wird durch eine Laserbearbeitungsauflage mit den Merkmalen des unabhängigen Patentanspruchs 1 gelöst. Bevorzugte Ausführungsformen sind Gegenstand der Unteransprüche. Ein Verfahren zum Bearbeiten eines Materialstücks ist Gegenstand des nebengeordneten Patentanspruchs 13.

Gemäß einem ersten Aspekt bezieht sich die Erfindung auf eine Laserbearbeitungsauflage, insbesondere eine Miniaturbauteil-Laserbearbeitungsauflage. Die Laserbearbeitungsauflage umfasst ein Auflageelement mit einer Auflagefläche. Die Auflagefläche kann eben ausgebildet sein. Alternativ kann die Auflagefläche eine oder mehrere Ausnehmungen bzw. Kavitäten in der Auflagefläche aufweisen. Diese Ausnehmungen bzw. Kavitäten können mit ihrer Form an das zu bearbeitende Materialstück bzw. Werkstück bzw. deren Kontur angepasst sein. Die Auflagefläche ist vorzugsweise planar ausgebildet, kann aber an der Oberfläche angeraut sein, um die Hafteigenschaften von Klebemittel zu verbessern, das zur Materialstück- bzw. Werkstückfixierung verwendet wird. Das Auflageelement ist aus einem mittels Laserstrahlung bearbeitbaren Material gebildet. Dies kann beispielsweise ein Metall oder aber auch eine Keramik sein. Unterhalb der Auflagefläche ist eine Vielzahl von Kanälen vorgesehen, die dazu ausgebildet sind, bei der Herstellung des Werkstücks mittels eines Laserbearbeitungsprozesses verwendetes Prozessgas abzuführen.

Das Auflageelement weist vorzugsweise eine durchgehende, unterbrechungsfreie Oberfläche ohne Vertiefungen auf, die bis in die Kanäle hineinreichen. Oberhalb der Kanäle ist ein Materialbereich vorgesehen, der die Kanäle verschließt. Der Materialbereich ist dazu ausgebildet, mittels eines Laserbearbeitungswerkzeugs partiell freigeschnitten zu werden, um in die Kanäle hineinreichende Vertiefungen zu bilden.

In anderen Worten sind damit die zum Abführen des Prozessgases verwendeten Kanäle zur Auflagefläche hin geschlossen. Vorzugsweise werden diese vor der ersten Verwendung des Auflageelements bzw. unmittelbar vor der erstmaligen Materialbearbeitung durch einen Laserbearbeitungsprozess abhängig von der Form des herzustellenden Werkstücks ortsselektiv geöffnet, und zwar abhängig von der Kontur, die das herzustellende Werkstück hat.

Der wesentliche Vorteil der erfindungsgemäßen Laserbearbeitungsauflage besteht darin, dass selbst Werkstücke in Form von Miniaturbauteilen, die beispielsweise in der Uhrenindustrie oder in sonstigen feinmechanischen Anwendungen benötigt werden, auf der Laserbearbeitungsauflage flächig fixiert und damit sicher gehalten werden können. Durch die flächig durchgehende Ausbildung der Auflagefläche wird zudem erreicht, dass die Werkstücke nicht lediglich punktuell oder linienförmig auf der Auflagefläche aufliegen sondern flächig und damit keine Beschädigungen, beispielsweise in Form von punktförmigen oder linienförmigen Marken entstehen. Zuletzt ist über die Kanäle in der Laserbearbeitungsauflage eine optimale Abführung des Prozessgases möglich, das vorzugsweise auch über die Kanäle abgesaugt werden kann, so dass ein geringer Gegendruck und damit ein reduzierter Prozessgasstrom möglich ist.

Erfindungsgemäß sind der oberhalb der Kanäle befindliche Materialbereich und der die Kanäle aufweisende Abschnitt des Auflageelements aus einem Materialstück (d.h. einstückig) gebildet, d.h. nicht aus mehreren übereinander angeordneten Schichten aufgebaut. Dadurch können durch die Laserbearbeitungsauflage Werkstücke in Form von Miniaturbauteilen hergestellt werden, da das Auflageelement aufgrund der Einstückigkeit des oberhalb der Kanäle befindlichen Materialbereichs und des die Kanäle aufweisenden Abschnitts verzugsfrei oder im Wesentlichen verzugsfrei ist.

In einem Ausführungsbeispiel verlaufen die Kanäle parallel oder im Wesentlichen parallel zur Auflagefläche, d.h. die Kanäle verlaufen in Kanallängsrichtung in einem festen Abstand unterhalb der Auflagefläche. Des Weiteren sind die Kanäle vorzugsweise gerade ausgebildet und verlaufen jeweils parallel zueinander. Die Kanäle können beispielsweise durch längliche Bohrungen gebildet sein, die das Auflageelement vollständig oder im Wesentlichen vollständig durchziehen und zumindest zu einer Seitenfläche des Auflageelements hin geöffnet sind. Alternativ können die Kanäle, je nach Anwendungsfall auch in Kanallängsrichtung frei geformt, beispielsweise gewölbt, kurvig oder mehrfach verzweigt, beispielsweise netz- oder gitterartig ausgebildet sein. Derartige Freiform-Kanäle können beispielsweise durch additive Verfahren, beispielsweise Lasersintern, hergestellt werden. Dadurch kann eine homogene oder im Wesentlichen homogene Gasabführung über die Kanäle erfolgen. Im Falle von wasserstrahlgeführtem Laserstrahlschneiden kann über die Kanäle anstelle des Prozessgases das Wasser abgeführt werden.

In einem Ausführungsbeispiel sind entlang einer ersten Seitenfläche des Auflageelements mehrere Kanäle beabstandet zueinander angeordnet und die Kanäle durchziehen das Auflageelement in einer Richtung quer zu dieser ersten Seitenfläche. Vorzugsweise sind die Kanäle senkrecht zu dieser Seitenfläche in das Auflageelement eingebracht, wobei aber auch grundsätzlich eine schräge Einbringung oder ein gebogener oder kurviger Verlauf der Kanäle denkbar ist.

Vorzugsweise weisen unmittelbar benachbarte Kanäle jeweils den gleichen oder im Wesentlichen den gleichen Abstand zueinander auf. Der Abstand der aneinander angrenzenden Kanalwandungen bzw. die quer zu einer Längsrichtung gemessene Breite von Abstandselementen kann je nach Anwendungsfall beispielsweise in einem Bereich zwischen 0,5mm und 5mm, insbesondere zwischen 1mm und 3mm gewählt sein.

In einem Ausführungsbeispiel werden die Kanäle durch Bohrungen gebildet, die zu wenigstens einer Seitenfläche des Auflageelements hin offen ausgebildet sind. Dadurch kann Prozessgas über die an der Seitenfläche vorgesehenen Öffnungen durch eine Absaugeinrichtung abgefördert werden.

In einem Ausführungsbeispiel sind die Kanäle in einem Abstand zwischen 1mm und 5mm, insbesondere zwischen 2mm und 3mm unterhalb der Auflagefläche angeordnet. Dadurch kann erreicht werden, dass die Kanäle in einem Freischneideprozess einfach und zeitsparend von oben her angeschnitten werden können, so dass über die Kanäle eine gute Abführung des Prozessgases möglich ist.

In einem Ausführungsbeispiel ist in dem Auflageelement zumindest ein Kühlkanal gebildet, der zur Durchleitung eines Temperiermediums ausgebildet ist. Durch die Durchleitung des Temperiermediums kann erreicht werden, dass das Auflageelement bzw. die Laserbearbeitungsauflage temperiert bzw. gekühlt wird. Dadurch können ein Aufheizen des Auflageelements durch die einwirkende Laserstrahlung und mit der Aufheizung verbundene Positionierungenauigkeiten reduziert bzw. verhindert werden.

In einem Ausführungsbeispiel ist das Auflageelement aus einem Metall oder einer Keramik gebildet. Derartige Materialien lassen sich gut mittels Laserbearbeitungsverfahren bearbeiten. Für den Fall, dass die Laserbearbeitungsauflage mehrteilig ausgebildet ist, kann das die Auflagefläche bildende Auflageelement aus den genannten Materialien gebildet sein. Ein unterhalb des Auflageelements angeordnetes Element der Laserbearbeitungsauflage kann aus den gleichen oder anderen Materialien gebildet sein.

Gemäß einem Ausführungsbeispiel weist die Laserbearbeitungsauflage zumindest einen Kanal oder eine Kammer auf, die zur Beaufschlagung mit Unterdruck ausgebildet ist. Der Kanal oder die Kammer erstreckt sich vorzugsweise großflächig unter der Auflagefläche, so dass eine ortsverteilte Unterdruckbeaufschlagung durch Saugkanäle erfolgen kann, die sich von dem Kanal oder der Kammer in Richtung der Auflagefläche erstrecken.

Gemäß einem Ausführungsbeispiel sind Saugkanäle vorgesehen, die sich von dem Kanal oder der Kammer in Richtung der Auflagefläche erstrecken und an der Auflagefläche in Saugöffnungen enden. Dadurch kann das Materialstück durch Unterdruckbeaufschlagung gegenüber der Auflagefläche fixiert werden.

Gemäß einem anderen Ausführungsbeispiel sind Saugkanäle vorgesehen, die sich von dem Kanal oder der Kammer in Richtung der Auflagefläche erstrecken. Die Saugkanäle sind im Bereich der Auflagefläche verschlossen. Der Verschluss ist vorzugsweise lediglich oberflächig, d.h. die den Verschluss bildende Materialschicht hat beispielsweise eine Materialstärke von 2mm oder weniger, insbesondere 1mm oder weniger. Damit ist der Saugkanal zunächst verschlossen und kann selektiv geöffnet werden, beispielsweise mittels Laserbohren oder Laserschneiden. Dadurch lassen sich an die Form des zu bearbeitenden Materialstücks oder des herzustellenden Werkstücks ortsangepasste Saugöffnungen schaffen.

Gemäß einem Ausführungsbeispiel sind die Kanäle zwischen einer Vielzahl von zueinander beabstandet angeordneten, stab- oder rohrförmig ausgebildeten Abstandselementen vorgesehen. Die Abstandselemente sind vorzugsweise ortsverteilt vorgesehen und belegen lediglich eine Teilfläche der Grundfläche des Laserbearbeitungsauflage bzw. der Auflagefläche. Beispielsweise ist der durch die Kanäle belegte Flächenanteil bezogen auf die Gesamtfläche der Auflagefläche größer als 50 %, insbesondere größer 70 %, besonders bevorzugt größer 80 %.

Vorzugsweise sind zumindest einige Abstandselemente rohrförmig ausgebildet und bilden durch deren Rohrform einen Saugkanal aus. Damit kann durch die Abstandselemente nicht nur die Auflagefläche gestützt sondern auch durch diese Abstandselemente hindurch der Saugkanal geschaffen werden.

Gemäß einem Ausführungsbeispiel durchziehen die Kanäle das Auflageelement gitterartig. Dadurch kann erreicht werden, dass beim Einbringen der ersten Bearbeitungskontur die Kanäle möglichst großflächig getroffen und freigeschnitten werden. Bei diesem Freischneiden werden vorzugsweise auch die die Kanäle voneinander trennenden Stege bzw. Abstandselemente zumindest teilweise durchtrennt und/oder abgetragen.

Alternativ können die Kanäle und/oder die die Kanäle voneinander zumindest partiell trennenden Stege bzw. Abstandshalter an die Form des herzustellenden Werkstücks angepasst sein.

Gemäß einem Ausführungsbeispiel ist die Laserbearbeitungsauflage zumindest partiell mittels eines additiven Herstellungsverfahrens hergestellt. Dieses Herstellungsverfahren kann beispielsweise ein Lasersinter-Verfahren sein. Dabei kann die Laserbearbeitungsauflage entweder vollständig durch das additive Herstellungsverfahren hergestellt sein oder es kann lediglich ein oberer Abschnitt, nämlich der die Kanäle und die Auflagefläche umfassende Abschnitt der Laserbearbeitungsauflage durch das additive Herstellungsverfahren hergestellt sein. Im letzteren Fall kann ein unterer Abschnitt beispielsweise durch spanende Materialbearbeitung vorgefertigt sein, und der obere Abschnitt wird durch das additive Herstellungsverfahren, d.h. durch ortsselektive Materialablagerung, auf dem vorgefertigten Abschnitt aufgebaut oder nach dessen getrennter Herstellung mit dem unteren Abschnitt verbunden. Die Verbindung kann dabei insbesondere stoffschlüssig erfolgen.

Gemäß einem weiteren Aspekt betrifft die Erfindung ein Verfahren zum Bearbeiten eines Materialstücks. Das Verfahren umfasst zumindest folgende Schritte:
- Bereitstellen einer Laserbearbeitungsauflage, die ein Auflageelement mit einer Auflagefläche und einer Vielzahl von unterhalb der Auflagefläche gebildeten Kanälen aufweist;
- Bearbeiten des Auflageelements mittels eines Laserbearbeitungsprozesses, um in der Auflagefläche zumindest eine erste Bearbeitungskontur zu erzeugen;
- Aufbringen eines Materialstücks auf die Auflagefläche, so dass das Materialstück die zumindest eine erste Bearbeitungskontur überdeckt;
- Bearbeiten des Materialstücks mittels eines Laserbearbeitungsprozesses zur Erzeugung eines Werkstücks mit einer zweiten Bearbeitungskontur, wobei die in der Auflagefläche gebildete erste Bearbeitungskontur zumindest der Form nach der zweiten Bearbeitungskontur entspricht und die zweite Bearbeitungskontur deckungsgleich zur ersten Bearbeitungskontur zu liegen kommt;
- Abnehmen des Werkstücks von der Auflagefläche des Auflageelements.

Das formmäßige "Entsprechen" der zweiten Bearbeitungskontur in Bezug auf die erste Bearbeitungskontur bedeutet insbesondere, dass die erste und zweite Bearbeitungskontur formgleich bzw. im Wesentlichen formgleich ist oder sich lediglich in für die technische Funktion unwesentlichen Konturabweichungen unterscheiden.

Der wesentliche Vorteil des Verfahrens besteht darin, dass eine flächige Lagerung des Materialstücks bzw. Werkstücks auf der Laserbearbeitungsauflage erfolgt und durch die erste Bearbeitungskontur freigeschnittene Bereiche bzw. Vertiefungen unterhalb des zu bearbeitenden Materialstücks entstehen, die eine effektive und beschädigungsfreie Herstellung des Werkstücks ermöglichen.

Gemäß einem Ausführungsbeispiel werden bei der Erzeugung der ersten Bearbeitungskontur eine oder mehrere Vertiefungen im Auflageelement erzeugt, die bis in zumindest einen der Kanäle hineinreichen. Dadurch werden zumindest ein Teil der im Auflageelement eingebrachten Kanäle zumindest partiell zur Auflagefläche hin geöffnet, so dass über die Kanäle eine Abführung des bei dem Laserbearbeitungsprozess verwendeten Prozessgas erreicht werden kann.

Gemäß einem Ausführungsbeispiel weist die Konturbreite der ersten Bearbeitungskontur die gleiche Breite oder eine größere Breite auf als die Konturbreite der zweiten Bearbeitungskontur. Damit ist sichergestellt, dass die Flanken der ersten Bearbeitungskontur in Emissionsrichtung des Laserstrahls lateral zu den Flanken der zweiten Bearbeitungskontur beabstandet sind und damit der Laserstrahl bei der Bearbeitung des Materialstücks lediglich freigeschnittene Bereiche des Auflageelements trifft.

Gemäß einem Ausführungsbeispiel ist das Materialstück stoffschlüssig mit der Auflagefläche der Laserschneidauflage verbunden. Diese stoffschlüssige Verbindung kann insbesondere durch einen Klebstoff erfolgen. Insbesondere wird ein Klebstoff mit hoher Wärmeleitfähigkeit verwendet, um die Wärmeableitung von dem Materialstück in die Laserschneidauflage zu verbessern. Als Klebstoff wird vorzugsweise ein durch Lösungsmittel lösbarer Klebstoff verwendet. Dadurch kann eine flächige Verbindung des Materialstücks mit dem Auflageelement erreicht werden, so dass auch ein Miniaturwerkstück aus dem Materialstück herausgearbeitet werden kann, das flächig an dem Auflageelement haftet.

Gemäß einem anderen Ausführungsbeispiel wird das Materialstück durch Unterdruckbeaufschlagung gegenüber der Auflagefläche fixiert.

Gemäß einem Ausführungsbeispiel wird die Laserschneidauflage durch ein Durchleiten eines Kühlfluids durch einen Kühlkanal temperiert. Dadurch können unerwünschte thermische Ausdehnungen und damit verbundene Positionierungs- und Fertigungsungenauigkeiten verhindert werden.

Gemäß einem Ausführungsbeispiel werden über die Kanäle beim Laserbearbeitungsprozess eingesetzte Prozessgase abgeleitet. Das Ableiten kann passiv alleine durch den Gasdruck der Prozessgase oder aber unterstützt durch eine Absaugeinrichtung erfolgen. Dadurch entsteht im Bereich des zu bearbeitenden Materialstücks ein geringerer Gegendruck und es kann der Prozessgasstrom (d.h. Volumenstrom an Prozessgas) verringert werden.

Gemäß einem Ausführungsbeispiel wird vor dem Abnehmen des Werkstücks von der Auflagefläche ein das Werkstück auf der Auflagefläche fixierender Kleber angelöst oder aufgelöst. Dies kann beispielsweise über geeignete Lösungsmittel und/oder unterstützt durch ein Ultraschallbad erfolgen.

Gemäß einem Ausführungsbeispiel wird vor dem Aufbringen des Materialstücks auf die Auflagefläche zumindest ein Saugkanal, über den das Materialstück mit Unterdruck beaufschlagbar ist, mittels eines Laserbearbeitungsprozesses zur Auflagefläche hin geöffnet. Das Öffnen kann beispielsweise durch Laserbohren oder Laserschneiden bewirkt werden. Dadurch können ortsselektiv und insbesondere angepasst an die Form des Werkstücks Saugöffnungen an der Auflagefläche geschaffen werden.

Unter dem Begriff "Laserbearbeitungswerkzeug" im Sinne der Erfindung wird insbesondere ein Werkzeug verstanden, das hochenergetische Laserstrahlung bereitstellt, mittels der ein Materialabtrag an einem zu bearbeitenden Werkstück bewirkt wird. Das "Laserbearbeitungswerkzeug" kann dabei eine Optik aufweisen, mittels der die Laserstrahlung gebündelt bzw. fokussiert wird.

Unter dem Begriff "Laserbearbeitungsmaschine" im Sinne der Erfindung wird insbesondere eine Maschine verstanden, mittels der durch eine Laserstrahlung ein Materialabtrag erfolgt, beispielsweise Laserbohren, Laserschneiden, Laserdrehen oder ein flächiger Materialabtrag, der lediglich Material abträgt ohne eine Öffnung durch das Werkstück hindurch zu erzeugen.

Unter dem Begriff "Kanal" im Sinne der Erfindung wird insbesondere ein länglicher, in Längsrichtung gesehen umfangseitig geschlossener Fluidweg verstanden, der in einem Material ausgebildet ist, beispielsweise durch eine längliche Bohrung. Die Kanäle können aber auch netz- oder gitterartig angelegt sein und die Laserbearbeitungsauflage mehrfach verzweigt durchziehen.

Unter dem Begriff "Werkstück" im Sinne der Erfindung wird jegliches Bauteil verstanden, das über einen Laserbearbeitungsprozess fertigbar ist. Ein "Werkstück" kann dabei ein Halbfabrikat sein, das weiteren Bearbeitungsschritten zu unterziehen ist, oder aber ein Fertigfabrikat.

Unter dem Begriff "Materialstück" im Sinne der Erfindung wird jegliches Stück eines Materials verstanden, das in einem Laserbearbeitungsprozess bearbeitbar ist, insbesondere ein metallisches Flachmaterial oder ein dreidimensional geformter Materialabschnitt.

Unter dem Begriff "Miniaturwerkstück" im Sinne der Erfindung werden Werkstücke mit kleinen geometrischen Abmessungen und/oder Werkstücke mit hochgenau zu fertigenden Strukturen und Konturen verstanden, beispielsweise Werkstücke für die Uhrenindustrie oder sonstige feinmechanische Werkstücke.

Die Ausdrücke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
- Fig. 1: beispielhaft eine Ausführungsform einer Laserbearbeitungsauflage in einer perspektivischen Ansicht;
- Fig. 2: beispielhaft ein die Verfahrensschritte zur Bearbeitung eines Materialstücks veranschaulichendes Diagramm;
- Fig. 3: beispielhaft eine Ausschnittdarstellung der Laserbearbeitungsauflage mit in die Auflagefläche eingebrachter erster Bearbeitungskontur;
- Fig. 4: beispielhaft die Laserbearbeitungsauflage gemäß Fig. 3 mit einem im Bereich der ersten Bearbeitungskontur aufgebrachten Materialstück;
- Fig. 5: beispielhaft das in Fig. 4 gezeigte Materialstück, in dem eine zweite Bearbeitungskontur eingebracht wurde, um ein Werkstück zu erzeugen;
- Fig. 6: beispielhaft das in Fig. 5 gezeigte Materialstück, nachdem der das Werkstück umgebende Materialabschnitt des Materialstücks entfernt wurde; und
- Fig. 7: beispielhaft die Laserbearbeitungsauflage mit dem erzeugten Werkstück gemäß Fig. 6 in einer perspektivischen räumlichen Darstellung;
- Fig. 8: beispielhaft ein weiteres Ausführungsbeispiel einer Laserbearbeitungsauflage in einer perspektivischen Darstellung;
- Fig. 9: beispielhaft die Laserbearbeitungsauflage gemäß Fig. 8 in einer perspektivischen Schnittdarstellung;
- Fig. 10: beispielhaft ein weiteres Ausführungsbeispiel einer Laserbearbeitungsauflage in einer perspektivischen Darstellung;
- Fig. 11: beispielhaft die Laserbearbeitungsauflage gemäß Fig. 10 in einer seitlichen Schnittdarstellung.

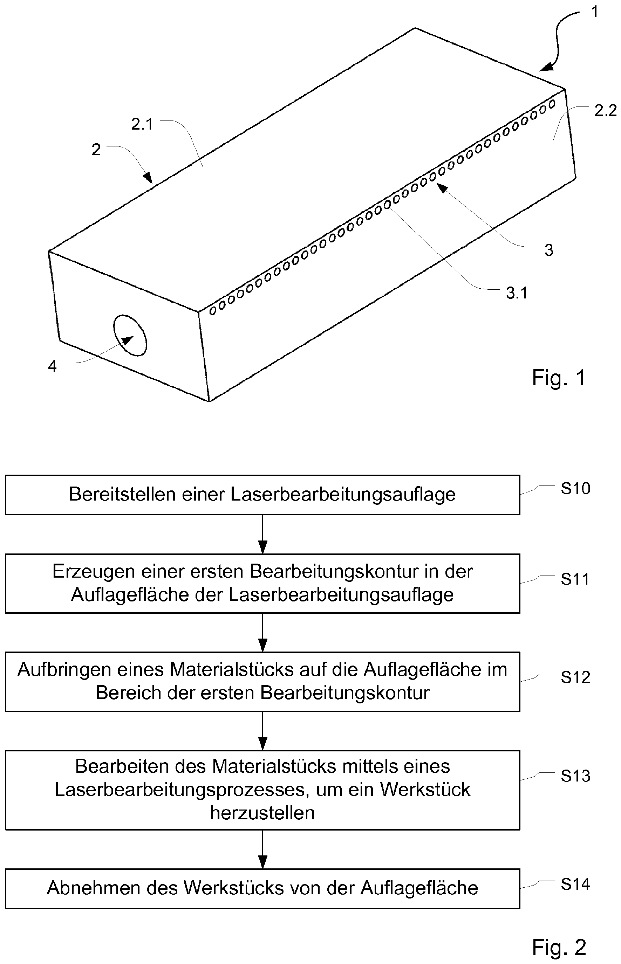

In Figur 1 ist eine Laserbearbeitungsauflage 1 in einer perspektivischen Darstellung gezeigt. Die Laserbearbeitungsauflage 1 umfasst ein Auflageelement 2, das im gezeigten Ausführungsbeispiel quaderförmig ausgebildet ist. Die Ausbildung des Auflageelements 2 soll jedoch nicht auf diese Form beschränkt sein. Vielmehr kann das Auflageelement 2 auch von der Quaderform abweichende, andere Formen annehmen.

Das Auflageelement 2 umfasst eine Auflagefläche 2.1, auf dem ein mittels eines Laserbearbeitungsprozesses zu bearbeitendes Materialstück 5 auflegbar ist. Im gezeigten Ausführungsbeispiel ist die Auflagefläche 2.1 eine ebene, insbesondere planare Auflagefläche. Unter "ebene Auflagefläche" wird hierbei insbesondere eine Auflagefläche verstanden, die eine möglichst vollflächige Auflage für das zu bearbeitende Materialstück 5 bildet. Alternativ kann die Auflagefläche 2.1 auch lokale Ausnehmungen oder Kavitäten aufweisen, um ein konturiertes Materialstück aufzunehmen. Die Ausnehmung oder Kavität kann dabei an die Konturierung des Materialstücks angepasst sein. Zur stoffschlüssigen Verbindung des Materialstücks 5 mit der Auflagefläche 2.1 des Auflageelements 2 kann die Auflagefläche 2.1 eine angeraute Oberfläche oder eines sonstige Oberflächenstrukturierung aufweisen.

Unterhalb der Auflagefläche 2.1 ist eine Vielzahl von Kanälen 3 vorgesehen. Diese Kanäle 3 sind insbesondere oberflächennah, d.h. mit geringem Abstand unterhalb der Auflagefläche 2.1 vorgesehen. Insbesondere können die Kanäle 3 in einem Abstand d zwischen 0,1mm und 10mm unterhalb der Auflagefläche 2.1 angeordnet sein. In anderen Worten bedeutet dies, dass der oberhalb der Kanäle 3 liegende, durchgängige Materialbereich des Auflageelements 2 eine Materialstärke zwischen 0,1 mm und 10 mm aufweist.

Die Kanäle 3 verlaufen insbesondere parallel oder im Wesentlichen parallel zur Auflagefläche 2.1. Zudem sind die Kanäle 3 beispielsweise geradlinige Kanäle, wobei die Achsen der Kanäle parallel oder im Wesentlichen parallel zueinander angeordnet sind. Alternativ können die Kanäle 3 auch eine Freiform aufweisen (gewölbt, kurvig etc.). Die Kanäle 3 sind weiterhin vorzugsweise verteilt entlang einer ersten Seitenfläche 2.2 und beabstandet zueinander angeordnet. Sie durchziehen vorzugsweise das Auflageelement 3 vollständig oder im Wesentlichen vollständig und weisen zumindest an der ersten Seitenfläche 2.2, vorzugsweise auch an einer der ersten Seitenfläche 2.2 gegenüberliegenden Seitenfläche Kanalöffnungen 3.1 auf.

Die Kanäle 3 sind beispielsweise durch längliche Bohrungen gebildet, die in das Auflageelement 2 oberflächennah eingebracht sind. Alternativ ist der Herstellung der Kanäle 3 bzw. zumindest des die Kanäle 3 aufweisenden Abschnitts des Auflageelements 2 durch additive Verfahren, beispielsweise Lasersintern, möglich. In diesem Falle können die Kanäle 3 auch eine von der kreisrunden Form abweichende Querschnittsform (z.B. oval, polygonförmig, rechteckförmig, dreieckig etc.) aufweisen. Sie weisen beispielsweise einen Kanaldurchmesser im Bereich zwischen 0,5mm und 20mm, vorzugsweise zwischen 1mm und 2mm auf.

Die Kanäle 3 können relativ eng aneinander anschließend vorgesehen sein, wie dies beispielsweise in den Figuren 1, 4 und 7 zu erkennen ist. Die Wandstärke des zwischen den Kanälen 3 verbleibenden Materials (d.h. der Stege 7) kann beispielsweise kleiner 2mm, vorzugsweise kleiner als 1mm, besonders bevorzugt bis hin zu 0,1 mm betragen.

Die Kanäle 3 sind dazu vorgesehen, dass in einem vor dem eigentlichen Bearbeitungsschritt des Materialstücks 5 vollzogenen Schritt Vertiefungen in die Auflagefläche 2.1 eingebracht werden, deren Tiefe derart gewählt ist, dass die Vertiefungen zumindest abschnittsweise in zumindest einen, vorzugsweise mehrere Kanäle 3 hineinreichen. In anderen Worten werden die Kanäle 3 über die Vertiefungen zumindest partiell freigeschnitten, so dass ein oder mehrere Kanäle 3 auch zur Auflagefläche 2.1 hin offen sind.

Die Laserbearbeitungsauflage 1 weist zudem zumindest einen Kühlkanal 4 auf, der das Auflageelement 2 durchzieht. Der Kühlkanal 4 kann beispielsweise unterhalb der Kanäle 3 im Auflageelement 2 verlaufen. Vorzugsweise verlaufen die Kanäle 3 quer zur Längsachse des Kühlkanals 4. Insbesondere kann die Längsachse der Kanäle 3 senkrecht oder im Wesentlichen senkrecht zur Längsachse des Kühlkanals 4 verlaufen.

Durch den Kühlkanal 4 kann ein Kühlmedium, insbesondere eine Kühlflüssigkeit geleitet werden, um die Laserbearbeitungsauflage 1 zu kühlen. Dadurch kann verhindert werden, dass ein auf die Auflagefläche 2.1 aufgebrachtes Materialstück 5 bzw. das Werkstück 6 bei der Laserbearbeitung zu sehr erhitzt wird. Die Wärme kann von dem Materialstück 5 bzw. dem Werkstück 6 an das Auflageelement 2 abgegeben und über das Kühlmedium abgeführt werden.

Zumindest das Auflageelement 2 der Laserbearbeitungsanlage 1 ist erfindungsgemäß einstückig aus einem Vollmaterial gebildet. Es kann insbesondere aus einem Metall, Glas, Kunststoff oder aber auch aus einer Keramik gebildet sein.

Die Laserbearbeitungsauflage 1 kann mehrteilig ausgebildet sein und ein auswechselbares einteiliges Auflageelement 2 aufweisen, das die Auflagefläche 2.1 bildet und die Kanäle 3 beinhaltet. Der Kühlkanal 4 hingegen kann in einem von dem Auflageelement 2 getrennten Abschnitt der Laserbearbeitungsauflage 1 vorgesehen sein, so dass dieser nach dem Auswechseln des Auflageelements 2 wiederverwendet werden kann. Das auswechselbare Auflageelement 2 kann mit jeglichen geeigneten Mitteln (z.B. Verschrauben, Verspannen etc.) mit dem den Kühlkanal 4 aufweisenden Abschnitt der Laserbearbeitungsauflage 1 verbunden sein.

Die Laserbearbeitungsauflage 1 kann vorzugsweise Fixiermittel aufweisen, mittels denen diese in eine Aufnahme einer Laserbearbeitungsmaschine einbringbar, insbesondere einspannbar ist. Diese Fixiermittel können beispielsweise durch entsprechend geformte Angriffsflächen für eine Einspannvorrichtung, Nuten oder Vorsprünge für eine formschlüssige Verbindung o.ä. gebildet sein. Insbesondere können Fixiermittel vorgesehen sein, die die Fixierung der Laserbearbeitungsauflage 1 in einem Nullpunktspannsystem ermöglichen.

Fig. 2 zeigt ein Diagramm, das die Verfahrensschritte zur Herstellung eines Werkstücks 6, insbesondere eines Miniaturwerkstücks, unter Nutzung der Laserbearbeitungsauflage 1 veranschaulicht.

In einem ersten Schritt S10 wird eine Laserbearbeitungsauflage 1 bereitgestellt. Die Laserbearbeitungsauflage 1 kann beispielsweise in eine Aufnahme einer Laserbearbeitungsmaschine eingebracht werden, so dass ein Laserbearbeitungswerkzeug, das einen Laserstrahl bereitstellt, von oben auf die Auflagefläche 2.1 des Auflageelements 2 einwirken kann.

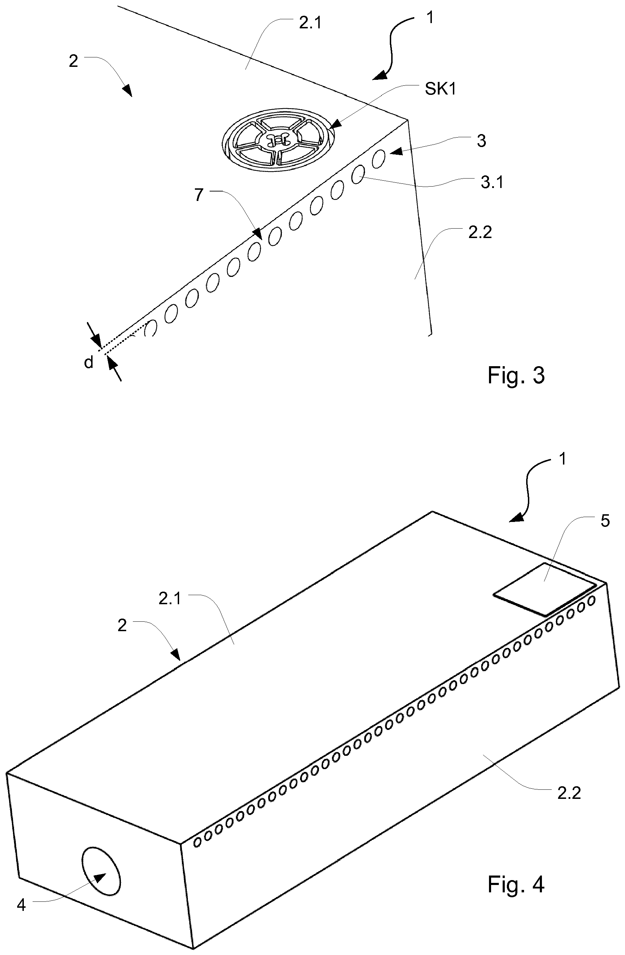

Anschließend wird mittels des Laserbearbeitungswerkzeugs 1 eine erste Bearbeitungskontur SK1 in der Auflagefläche 2.1 des Auflageelements 2 der Laserbearbeitungsauflage 1 erzeugt (S11). Figur 3 zeigt beispielsweise anhaltend einer Ausschnittdarstellung der Laserbearbeitungsauflage 1 eine erste Bearbeitungskontur SK1. Die erste Bearbeitungskontur SK1 entspricht dabei zumindest ihrer Form nach einer zweiten Bearbeitungskontur SK2, die das später auf der Laserbearbeitungsauflage 1 zu erzeugende Werkstück 6 aufweisen soll. Soll beispielsweise in einem späteren Verfahrensschritt ein Werkstück 6 mit der Kontur eines Zahnrades entstehen, wird in die Auflagefläche 2.1 eine ebensolche Kontur eines Zahnrades eingebracht. Es versteht sich, dass nacheinander auch mehrere erste Bearbeitungskonturen SK1 in das Auflageelement 2 eingebracht werden können, insbesondere flächig verteilt über die Auflagefläche 2.1, so dass in einem späteren Bearbeitungsprozess aus einem Materialstück 5 mehrere Werkstücke 6 herausgearbeitet werden können.

Vorzugsweise ist die Konturbreite der ersten Bearbeitungskontur SK1 breiter als die Konturbreite der zweiten Bearbeitungskontur SK2. Im Falle eines Laserschneidens ist die Schnittbreite der ersten Bearbeitungskontur SK1 breiter als die Schnittbreite der zweiten Bearbeitungskontur SK2. Dadurch kann erreicht werden, dass bei der nachfolgenden Bearbeitung des Materialstücks 5 der Laserstrahl lediglich Material des Materialstück 5 trifft und nicht Material des Auflageelements 2. In anderen Worten wird die Konturbreite der ersten Bearbeitungskontur SK1 derart gewählt, dass das Auflageelement 2 unterhalb der im Materialstück 5 zu erzeugenden zweiten Bearbeitungskontur SK2 freigeschnitten ist.

Vorzugsweise wirkt der Laserstrahl des Laserbearbeitungswerkzeugs derart lange auf das Auflageelement 2 ein, dass die erste Bearbeitungskontur SK1 eine Konturtiefe aufweist, die zumindest partiell bis in zumindest einen der Kanäle 3 hineinreicht. Vorzugsweise weist die erste Bearbeitungskontur SK1 eine homogene oder im Wesentlichen homogene Konturtiefe auf. Wie in Figur 3 ersichtlich, erstreckt sich die erste Bearbeitungskontur SK1 in einer ersten Raumrichtung über mehrere Kanäle 3 hinweg, so dass Abschnitte der ersten Bearbeitungskontur SK1 in Bereichen liegen, unter denen ein Kanal 3 verläuft. Jedoch kommen auch Abschnitte der ersten Bearbeitungskontur SK 1 in Bereichen zu liegen, in denen kein Kanal 3 vorgesehen ist. Dies ist beispielsweise im Bereich der Stege 7 der Fall, die zwischen den Kanälen 3 verlaufen.

Durch das zumindest partielle Öffnen eines Teils der Kanäle 3 zur Auflagefläche 2.1 hin wird erreicht, dass Prozessgas, das während der Laserbearbeitung appliziert wird, über die Kanäle 3 abgeleitet werden kann. Dadurch kann durch Laserablation verdampftes Material geeignet abgeführt werden.

Vorzugsweise ist eine Absaugung vorgesehen, die mit den Kanälen 3 entweder direkt verbunden ist oder zumindest in den Kanälen 3 eine Sogwirkung erzeugt, so dass das Prozessgas über die Kanäle 3 abgesaugt werden kann.

Nach dem Erzeugen der ersten Bearbeitungskontur SK1 in dem Auflageelement 2 wird ein Materialstück 5 auf die Auflagefläche 2.1 des Auflageelements 2 aufgebracht (S12). Das Materialstück 5 kann beispielsweise ein Flachmaterial sein, aus dem ein Werkstück 6 ausgeschnitten werden soll. Das Materialstück 5 wird insbesondere derart aufgebracht, dass dieses die im Auflageelement 2 eingebrachte erste Bearbeitungskontur SK1 überdeckt. Für den Fall, dass mehrere erste Bearbeitungskonturen SK1 erzeugt wurden, überdeckt das Materialstück 5 vorzugsweise mehrere, insbesondere alle ersten Bearbeitungskonturen SK1.

Figur 4 zeigt die Laserbearbeitungsauflage 1 mit einem Materialstück 5, das die in die Auflagefläche 2.1 eingebrachte erste Bearbeitungskontur SK1 überdeckt.

Das Materialstück 5 kann auf unterschiedliche Weise mit dem Auflageelement 2 verbunden werden. Abhängig von der Materialstärke des Materialstücks 5 und der Größe des aus dem Materialstück 5 herauszuarbeitenden Werkstücks 6 kann das Materialstück 5 kraftschlüssig oder stoffschlüssig mit dem Auflageelement 2 verbunden werden. Eine kraftschlüssige Verbindung kann beispielsweise durch Verspannen oder Verschrauben erfolgen. Bevorzugt ist insbesondere bei Materialstücken mit geringer Materialstärke und bei Herstellung von Miniaturwerkstücken eine stoffschlüssige Verbindung durch Verkleben. Bevorzugt wird das Materialstück 5 vollflächig oder im Wesentlichen vollflächig auf die Auflagefläche 2.1 aufgeklebt. Der Klebstoff kann hierbei vorzugsweise hohe Wärmeleiteigenschaften aufweisen, um die bei der Materialbearbeitung in das Materialstück 5 eingebrachte Wärmeenergie geeignet abführen zu können. Alternativ kann das Materialstück 5 an der Auflagefläche 2.1 des Auflageelements 2 durch Unterdruckbeaufschlagung, beispielsweise durch Ansaugen, fixiert werden.

Nach dem Aufbringen und Verbinden des Materialstücks 5 mit dem Auflageelement 2 wird mittels des Laserbearbeitungswerkzeugs eine zweite Bearbeitungskontur SK2 in das Materialstück 5 eingebracht (S13). Vorzugsweise wird die Materialstärke des Materialstücks 5 zumindest bereichsweise mittels des Laserbearbeitungswerkzeugs vollständig durchdrungen. Die zweite Bearbeitungskontur SK2 ist vorzugsweise formgleich oder im Wesentlichen formgleich mit der ersten Bearbeitungskontur SK1 und die zweite Bearbeitungskontur SK2 wird deckungsgleich oder im Wesentlichen deckungsgleich zur ersten Bearbeitungskontur SK1 eingebracht. Dadurch wird erreicht, dass beim Durchtrennen des Materials des Materialstücks 5 der Laserstrahl unterhalb des Materialstücks 5 vorher freigeschnittene Bereiche der Auflagefläche 2.1 trifft und damit das bei der Laserbearbeitung verwendete Prozessgas über die freigeschnittenen Kanäle 3 abgeleitet werden kann. Die zweite Bearbeitungskontur SK2 entspricht dabei vorzugsweise der Kontur bzw. Form des herzustellenden Werkstücks 6.

Nach dem Einbringen der zweiten Bearbeitungskontur SK2 in das Materialstück 5 werden das Werkstück 6 und die Reste des Materialstücks 5 von der Auflagefläche 2.1 abgenommen. Dies kann beispielsweise durch Anlösen bzw. Auflösen des Klebstoffs erfolgen. Hierzu kann beispielsweise ein Ultraschallbad oder ein Lösungsmittel verwendet werden. Auch andere dem Fachmann bekannte Verfahren können verwendet werden.

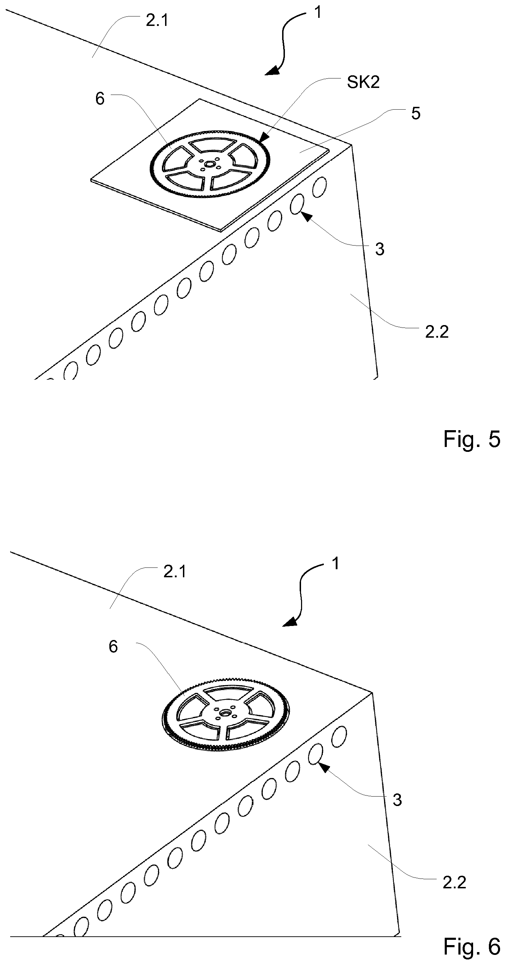

Figur 5 zeigt die Laserbearbeitungsauflage 1 mit dem Materialstück 5, in das die zweite Bearbeitungskontur SK2 eingebracht wurde. Figur 6 zeigt die Laserbearbeitungsauflage 1 mit dem herausgearbeiteten Werkstück 6, wobei die das Werkstück 6 umgebenden Reste des Materialstücks 5 bereits entfernt wurden.

Die Laserbearbeitungsauflage 1, insbesondere das Auflageelement 2 der Laserbearbeitungsauflage 1 kann mehrfach wiederverwendet werden, indem auf das Auflageelement 2 mit der ersten Bearbeitungskontur SK1 erneut ein Materialstück 5 aufgebracht wird.

Um sicherzustellen, dass nach einem Herausnehmen der Laserbearbeitungsauflage 1 bzw. dessen Auflageelement 2 die zweite Bearbeitungskontur SK2 wieder deckungsgleich zur ersten Bearbeitungskontur SK1 eingebracht wird, kann vorzugsweise die Lage der ersten Bearbeitungskontur SK1 vor dem Aufbringen des Materialstücks 5 detektiert werden, so dass die zweite Bearbeitungskontur SK2 ausgerichtet an der vorher detektierten Lage der ersten Bearbeitungskontur SK1 eingebracht wird.

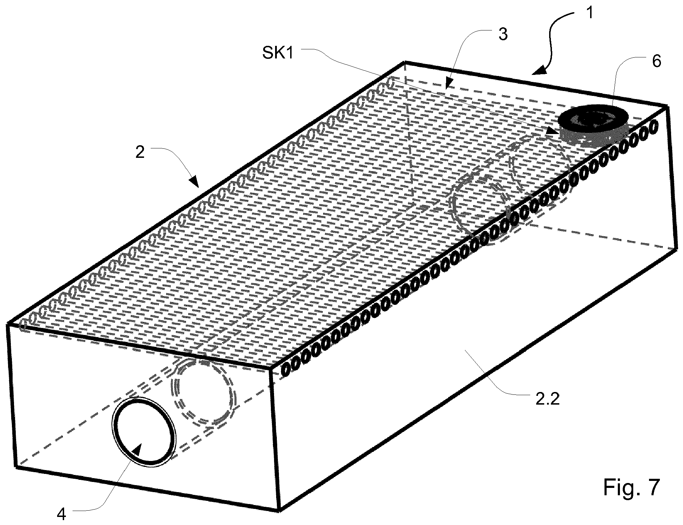

Fig. 7 zeigt eine räumliche Darstellung der Laserbearbeitungsauflage 1, wobei die Lage der Kanäle 3 im Auflageelement 2 relativ zu der ersten Bearbeitungskontur SK1 vorteilhaft gewählt ist. Die Kanäle 3 sind im Auflageelement 2 oberflächennah vorgesehen, so dass die erste Bearbeitungskontur SK1 zumindest teilweise bis in die Ebene der Kanäle 3 hineinreicht. Dadurch wird zumindest ein Teil der Kanäle 3 zur Auflagefläche 2.1 hin zumindest partiell geöffnet, so dass bei der nachfolgenden Laserbearbeitung des Materialstücks 5, die oberhalb der ersten Bearbeitungskontur SK1 erfolgt, das verwendete Prozessgas über die Kanäle 3 abgeführt werden kann.

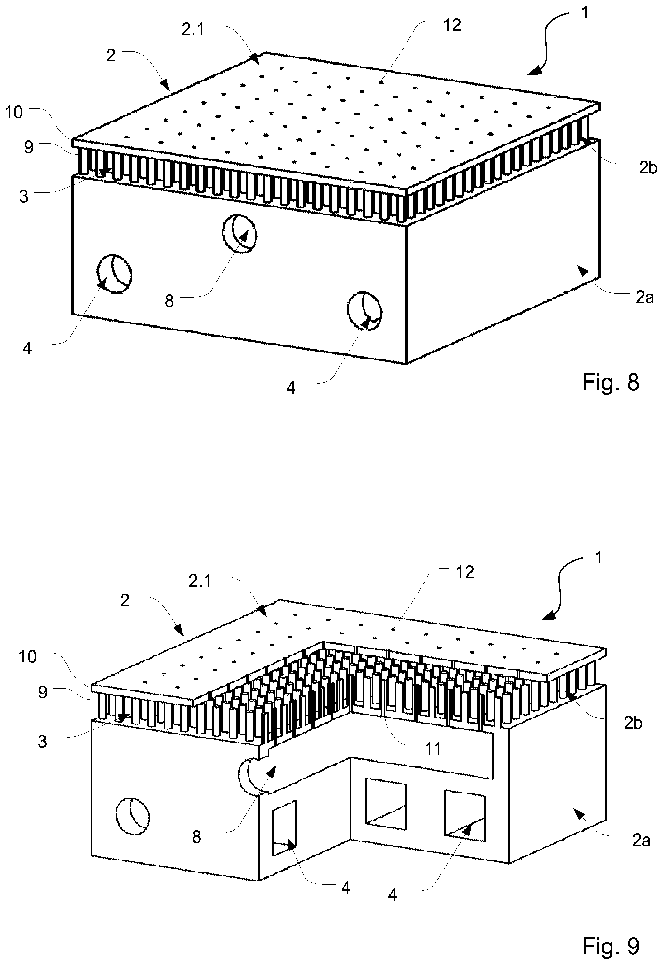

Fig. 8 und 9 zeigen eine Ausführungsform einer zumindest abschnittsweise durch Lasersintern hergestellten Laserbearbeitungsauflage 1 in unterschiedlichen Darstellungen.

Die Laserbearbeitungsauflage 1, insbesondere das Auflageelement 2 weist einen unteren Abschnitt 2a und einen oberen Abschnitt 2b auf. Im Gegensatz zu den zuvor beschriebenen Ausführungsbeispielen ist das Auflageelement 2 dazu ausgebildet, das Materialstück 5 und/oder das durch die Materialbearbeitung entstehende Werkstück 6 mittels Unterdruck zu fixieren.

Hierzu sind im unteren Abschnitt 2a des Auflageelements 2 ein oder mehrere Kanäle und/oder Kammern 8 vorgesehen, die das Auflageelement 2 unterhalb der Auflagefläche 2.1 durchziehen.

Des Weiteren können im unteren Abschnitt 2a des Auflageelements 2 ein oder mehrere Kühlkanäle 4 vorgesehen sein. Die Kühlkanäle 4 verlaufen vorzugsweise unterhalb des zumindest einen Kanals bzw. Kammer 8, d.h., dieser/diese sind zwischen den Kühlkanälen 4 und der Auflagefläche 2.1 vorgesehen.

Ein unterer Teil des Auflageelements 2, insbesondere der untere Abschnitt 2a, kann durch spanende Materialbearbeitung aus einem Vollmaterial hergestellt sein. Alternativ kann der untere Teil bzw. der untere Abschnitt 2a auch durch ein additives Herstellungsverfahren, insbesondere Lasersintern hergestellt sein.

An den unteren Abschnitt 2a des Auflageelements 2 schließt sich oberseitig ein oberer Abschnitt 2b an, in dem unterhalb der Auflagefläche 2.1 die Kanäle 3 ausgebildet sind. Dieser obere Abschnitt 2b ist zumindest teilweise durch ein additives Herstellungsverfahren, insbesondere Laser sind dann hergestellt. Durch ein derartiges additives Herstellungsverfahren ist es möglich, durch ein selektives Aufwachsen von Material eine frei geformte Kanalstruktur unterhalb der Auflagefläche 2.1 zu bilden.

Im gezeigten Ausführungsbeispiel sind die Kanäle 3 rasterartig geformt. Sie bilden eine netz- bzw. gitterartige vielfach verzweigte Kanalstruktur. Die Kanäle 3 werden dadurch gebildet, dass oberhalb des unteren Abschnitts 2a eine Vielzahl von Abstandselementen 9 vorgesehen sind, die örtlich verteilt und beabstandet zueinander angeordnet sind. Die Abstandselemente 9 sind insbesondere länglich ausgebildet, d.h. die axial gemessene Länge ist größer als die quer zu dieser Axialrichtung gemessene Quererstreckung. Im gezeigten Ausführungsbeispiel sind die Abstandselemente 9 pin- bzw. säulenartig ausgebildet. Die Abstandselemente 9 können beispielsweise einen runden oder im Wesentlichen runden Querschnitt oder aber auch einen polygonartig geformten Querschnitt aufweisen.

Die Abstandselemente 9 stehen von dem unteren Abschnitt 2a nach oben hin ab und tragen eine Materialschicht 10, die oberseitig die Auflagefläche 2.1 bildet. In anderen Worten bilden die Abstandselemente 9 eine Tragstruktur für die Materialschicht 10 bzw. die Auflagefläche 2.1. Damit belegen die Kanäle 3 den überwiegenden Teil der Fläche unterhalb der Auflagefläche 2.1. Beispielsweise ist der durch die Kanäle 3 belegte Flächenanteil bezogen auf die Gesamtfläche der Auflagefläche 2.1 größer als 50 %, insbesondere größer 70 %, besonders bevorzugt größer 80 %, insbesondere bis zu 90%. Dadurch können die Kanäle 3 unterhalb eines überwiegenden Teils eines Bearbeitungsbereichs des Auflageelements 2 verlaufen, wobei unter Bearbeitungsbereich derjenigen Bereich der Auflagefläche 2.1 zu verstehen ist, in dem die Laserbearbeitung des Materialstücks 5 erfolgt. Dadurch kann eine besonders effiziente Abführung der Prozessgase erfolgen, da beim Freischneiden der Kanäle 3 durch Einbringen der ersten Bearbeitungskontur SK1 der überwiegende Teil der Bearbeitungskontur SK1 direkt in Kanälen 3 endet und nicht im Bereich von Abstandselementen 9.

Um ein Materialstück 5 bzw. das Werkstück 6 durch Unterdruckbeaufschlagung gegenüber der Auflagefläche 2.1 fixieren zu können, sind in zumindest einem Teil der Abstandselemente 9 Saugkanäle 11 vorgesehen. Diese Saugkanäle 11 durchziehen die Abstandselemente 9 zumindest abschnittsweise und weisen in einem unteren Saugkanalabschnitt eine Öffnung auf, mittels der der jeweilige Saugkanal 11 mit der Kammer bzw. dem Kanal 8 fluidisch verbunden ist. Vorzugsweise verläuft der jeweilige Saugkanal 11 in axialer Richtung durch das Abstandselement 9.

Im gezeigten Ausführungsbeispiel sind in der Materialschicht 10 bzw. der Auflagefläche 2.1 Saugöffnungen 12 vorgesehen, wobei jede Saugöffnung 12 mit einem Saugkanal 11 korrespondiert, und zwar derart, dass sich der Saugkanal 11 durch die Saugöffnung 12 an der Auflagefläche 2.1 öffnet. Dadurch kann ein in der Kammer bzw. dem Kanal 8 anliegender Unterdruck über den Saugkanal 11 und die Saugöffnung 12 auf das Materialstück 5 bzw. das Werkstück 6 wirken und dieses gegenüber der Auflagefläche 2.1 fixieren.

Die Saugöffnungen 12 bzw. die Saugkanäle 11 können unmittelbar durch das additive Herstellungsverfahren gebildet werden, d.h. im Bereich der Saugöffnungen 12 bzw. der Saugkanäle 11 erfolgt kein Aufwachsen von Material, beispielsweise durch Lasersintern.

Gemäß einem anderen Ausführungsbeispiel können bei der Herstellung durch das additive Herstellungsverfahren in der Auflagefläche 2.1 noch keine Saugöffnungen 12 gebildet sein, die Saugkanäle 11 hingegen sind vorzugsweise zumindest teilweise bereits ausgebildet. In diesem Fall ist es möglich, dass vor der ersten Verwendung der Laserbearbeitungsauflage 1 und vor dem Auflegen des zu bearbeitenden Materialstücks 5 auf die Auflagefläche 2.1 zunächst die Saugöffnungen 12 hergestellt werden. Dies erfolgt vorzugsweise durch die Laserbearbeitungsmaschine selbst, die nachfolgend die Bearbeitung des Materialstücks 5 übernimmt.

Vorzugsweise werden mittels eines Laserbearbeitungsprozesses eine oder mehrere Saugöffnungen 12 gebildet, insbesondere gebohrt. Dabei wird die zumindest eine Saugöffnung 12 derart auf der Auflagefläche 2.1 bzw. der Materialschicht 10 platziert, dass die durch die Laserbearbeitungsmaschine geschaffene Öffnung auf einen darunter befindlichen Saugkanal 11 trifft, so dass eine durchgehende Öffnung zwischen der Kammer bzw. dem Kanal 8 und der Auflagefläche 2.1 besteht. Dadurch ist es möglich, dass abhängig von der Form des Materialstück 5 bzw. des herzustellenden Werkstücks 6 situationsabhängig in den Bereichen Saugöffnungen 12 geschaffen werden, in denen das Materialstück 5 und/oder das Werkstück 6 einen gegenüber der Auflagefläche 2.1 anliegenden Bereich aufweist.

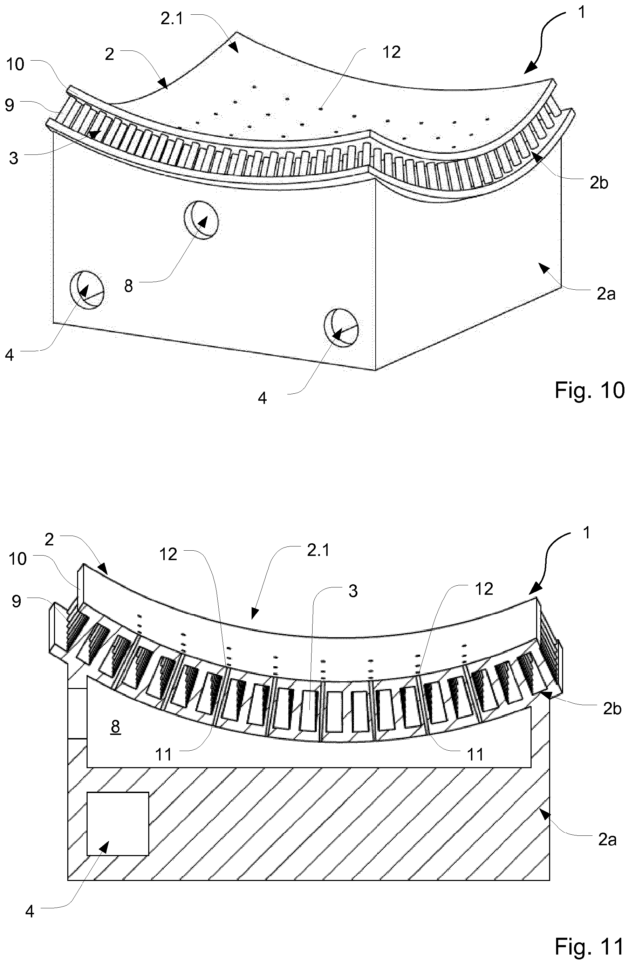

Die Figuren 10 und 11 zeigen ein weiteres Ausführungsbeispiel einer Laserbearbeitungsauflage 1, insbesondere eines Auflageelements 2.

Das Auflageelement 2 unterscheidet sich von dem zuvor beschriebenen Ausführungsbeispiel gemäß den Figuren 8 und 9 insbesondere dadurch, dass die Auflagefläche 2.1 keine ebene Fläche ist, sondern eine Wölbung bzw. Konturierung aufweist. Im gezeigten Ausführungsbeispiel ist die Auflagefläche 2.1 konkav gewölbt. Die Ausbildung der Auflagefläche 2.1 soll jedoch nicht auf diese Form beschränkt sein. Die Auflagefläche 2.1 kann vielmehr eine beliebige Formung aufweisen, insbesondere eine konvexe Formung oder eine gestufte Ausbildung. Dadurch lassen sich dreidimensional geformte Materialstücke vorteilhaft bearbeiten, da die Auflagefläche 2.1 zumindest abschnittsweise dem dreidimensional geformten Materialstück angepasst sein kann, so dass dieses trotz dessen nichtebenen Ausbildung flächig gegenüber der Auflagefläche 2.1 anliegt. Die Formung der Auflagefläche 2.1 kann insbesondere dadurch erreicht werden, dass zumindest der obere Abschnitt 2b des Auflageelements 2 durch ein additives Herstellungsverfahren, insbesondere durch Lasersintern, hergestellt ist.

Die Erfindung wurde voranstehend an Ausführungsbeispielen beschrieben. Es versteht sich, dass zahlreiche Änderungen sowie Abwandlungen möglich sind, ohne den Schutzumfang der Ansprüche zu verlassen.

### Bezugszeichenliste

- 1: Laserbearbeitungsauflage
- 2: Auflageelement
- 2a: unterer Abschnitt
- 2b: oberer Abschnitt
- 2.1: Auflagefläche
- 2.2: Seitenfläche
- 3: Kanal
- 3.1: Kanalöffnung
- 4: Kühlkanal
- 5: Materialstück
- 6: Werkstück
- 7: Steg
- 8: Kammer bzw. Kanal
- 9: Abstandselement
- 10: Materialschicht
- 11: Saugkanal
- 12: Saugöffnungen

- d: Abstand
- SK1: erste Bearbeitungskontur
- SK2: zweite Bearbeitungskontur

## Patentansprüche

1. Laserbearbeitungsauflage umfassend ein Auflageelement (2) mit einer Auflagefläche (2.1), wobei das Auflageelement (2) aus einem mittels Laserstrahlung bearbeitbaren Material gebildet ist und wobei unterhalb der Auflagefläche (2.1) eine Vielzahl von Kanälen (3) vorgesehen ist, und zwar derart, dass die Auflagefläche (2.1) oberhalb der Kanäle (3) durch einen Materialbereich gebildet ist, der die Kanäle (3) verschließt, wobei der Materialbereich dazu ausgebildet ist, mittels eines Laserbearbeitungswerkzeugs partiell freigeschnitten zu werden, um in die Kanäle (3) hineinreichende Vertiefungen zu bilden, wobei die Kanäle (3) dazu ausgebildet sind, bei der Herstellung eines Werkstücks (6) aus einem auf der Auflagefläche (2.1) befindlichen Materialstück (5) verwendetes Prozessgas abzuführen, **dadurch gekennzeichnet, dass** die Kanäle (3) unterhalb der Auflagefläche (2.1) in dem Auflageelement (2) vorgesehen sind und dass der oberhalb der Kanäle (3) befindliche Materialbereich und der die Kanäle (3) aufweisende Abschnitt des Auflageelements (2) einstückig aus einem Materialstück gebildet sind.

2. Laserbearbeitungsauflage nach Anspruch 1, **dadurch gekennzeichnet, dass** die Kanäle (3) parallel oder im Wesentlichen parallel zur Auflagefläche (2.1) verlaufen.

3. Laserbearbeitungsauflage nach Anspruch 1 oder 2, **dadurch gekennzeichnet, dass** entlang einer ersten Seitenfläche (2.2) des Auflageelements eine Vielzahl von Kanälen (3) beabstandet zueinander angeordnet sind und dass die Kanäle das Auflageelement in einer Richtung quer zu dieser ersten Seitenfläche (2.2) durchziehen.

4. Laserbearbeitungsauflage nach einem der vorhergehenden Ansprüche, **dadurch gekennzeichnet, dass** die Kanäle (3) durch Bohrungen gebildet werden, die zu wenigstens einer Seitenfläche des Auflageelements (2) hin offen ausgebildet sind.

5. Laserbearbeitungsauflage nach einem der vorhergehenden Ansprüche, **dadurch gekennzeichnet, dass** die Kanäle (3) in einem Abstand (d) zwischen 1mm und 5mm, vorzugsweise 2mm bis 3mm unterhalb der Auflagefläche (2.1) angeordnet sind.

6. Laserbearbeitungsauflage nach einem der vorhergehenden Ansprüche, **dadurch gekennzeichnet, dass** in dem Auflageelement (2) zumindest ein Kühlkanal (4) gebildet ist, der zur Durchleitung eines Temperiermediums ausgebildet ist.

7. Laserbearbeitungsauflage nach einem der vorhergehenden Patentansprüche, **dadurch gekennzeichnet, dass** die Laserbearbeitungsauflage zumindest einen Kanal oder eine Kammer (8) aufweist, die zur Beaufschlagung mit Unterdruck ausgebildet ist.

8. Laserbearbeitungsauflage nach Anspruch 7, **dadurch gekennzeichnet, dass** Saugkanäle (11) vorgesehen sind, die sich von dem Kanal oder der Kammer (8) in Richtung der Auflagefläche (2.1) erstrecken und an der Auflagefläche (2.1) in Saugöffnungen (12) enden.

9. Laserbearbeitungsauflage nach Anspruch 7, **dadurch gekennzeichnet, dass** Saugkanäle (11) vorgesehen sind, die sich von dem Kanal oder der Kammer (8) in Richtung der Auflagefläche (2.1) erstrecken und im Bereich der Auflagefläche (2.1) derart verschlossen sind, dass sie mittels Laserbohren oder Laserschneiden selektiv öffenbar sind.

10. Laserbearbeitungsauflage nach einem der vorhergehenden Patentansprüche, **dadurch gekennzeichnet, dass** die Kanäle (3) zwischen einer Vielzahl von zueinander beabstandet angeordneten, stab- oder rohrförmig ausgebildeten Abstandselementen (9) vorgesehen sind.

11. Laserbearbeitungsauflage nach einem der vorhergehenden Patentansprüche, **dadurch gekennzeichnet, dass** die Kanäle (3) raster- oder gitterartig das Auflageelement (2) durchziehen.

12. Laserbearbeitungsauflage nach einem der vorhergehenden Patentansprüche, **gekennzeichnet durch** deren zumindest partielle Herstellung mittels eines additiven Herstellungsverfahrens.

13. Verfahren zum Bearbeiten eines Materialstücks (5) umfassend folgende Schritte:
- Bereitstellen einer Laserbearbeitungsauflage (1), die ein Auflageelement (2) mit einer Auflagefläche (2.1) und einer Vielzahl von unterhalb der Auflagefläche (2.1) gebildeten Kanälen (3) aufweist, wobei ein oberhalb der Kanäle (3) befindlicher Materialbereich und der die Kanäle (3) aufweisende Abschnitt des Auflageelements (2) einstückig aus einem Materialstück gebildet ist;
- Bearbeiten des Auflageelements (2) mittels eines Laserbearbeitungsprozesses, um in der Auflagefläche (2.1) zumindest eine erste Bearbeitungskontur (SK1) zu erzeugen;
- Aufbringen eines Materialstücks (5) auf die Auflagefläche (2.1), so dass das Materialstück (5) die zumindest eine erste Bearbeitungskontur (SK1) überdeckt;
- Bearbeiten des Materialstücks (5) mittels eines Laserbearbeitungsprozesses zur Erzeugung eines Werkstücks (6) mit einer zweiten Bearbeitungskontur (SK2), wobei die in der Auflagefläche (2.1) gebildete erste Bearbeitungskontur (SK1) zumindest der Form nach der zweiten Bearbeitungskontur (SK2) entspricht und die zweite Bearbeitungskontur (SK2) deckungsgleich zur ersten Bearbeitungskontur (SK1) zu liegen kommt, wobei während des Laserbearbeitungsprozesses ein Prozessgas, das während der Laserbearbeitung appliziert wird, über die Kanäle abgeleitet wird;
- Abnehmen des Werkstücks (6) von der Auflagefläche (2.1) des Auflageelements (2).

14. Verfahren nach Anspruch 13, **dadurch gekennzeichnet, dass** die Laserschneidauflage (1) durch ein Durchleiten eines Kühlfluids durch einen Kühlkanal (4) temperiert wird.

15. Verfahren nach Anspruch 13 oder 14, **dadurch gekennzeichnet, dass** vor dem Aufbringen eines Materialstücks (5) auf die Auflagefläche (2.1) zumindest ein Saugkanal (11), über den das Materialstück (5) mit Unterdruck beaufschlagbar ist, mittels eines Laserbearbeitungsprozesses zur Auflagefläche (2.1) hin geöffnet wird.

## Claims

1. A laser machining support comprising a support element (2) having a support surface (2.1), wherein said support element (2) is formed from a material that is machinable by means of laser radiation and wherein a plurality of channels (3) are provided below said support surface (2.1) in such a way that said support surface (2.1) above said channels (3) is formed by a material region which closes said channels (3), wherein said material region is configured to be partially cut free using a laser machining tool in order to form recesses extending into said channels (3), wherein said channels (3) are configured to discharge process gas used in the manufacture of a workpiece (6) from a piece of material (5) located on said support surface (2.1), **characterized in that** said channels (3) are provided below said support surface (2.1) in said support element (2) and that the material region located above said channels (3) and the portion of said support element (2) including said channels (3) are integrally formed from a piece of material.

2. The laser machining support according to claim 1, **characterized in that** said channels (3) extend in parallel or substantially in parallel to said support surface (2.1).

3. The laser machining support according to claim 1 or 2, **characterized in that** a plurality of channels (3) are spaced apart from one another along a first side surface (2.2) of said support element and that the channels extend along the support element in a direction transverse to said first side surface (2.2).

4. The laser machining support according to one of the preceding claims, **characterized in that** said channels (3) are formed by bores which are open towards at least one side surface of said support element (2).

5. The laser machining support according to one of the preceding claims, **characterized in that** said channels (3) are arranged at a distance (d) between 1 mm and 5 mm, preferably 2 mm to 3 mm, below said support surface (2.1).

6. The laser machining support according to one of the preceding claims, **characterized in that** at least one cooling channel (4) configured to carry a temperature control medium is formed in said support element (2).

7. The laser machining support according to one of the preceding claims, **characterized in that** the laser machining support has at least one channel or a chamber (8) configured for the application of negative pressure.

8. The laser machining support according to claim 7, **characterized in that** suction channels (11) are provided which extend from the channel or the chamber (8) towards said support surface (2.1) and terminate in suction openings (12) on said support surface (2.1).

9. The laser machining support according to claim 7, **characterized in that** suction channels (11) are provided which extend from the channel or the chamber (8) towards said support surface (2.1) and are closed in the area of said support surface (2.1) in such a way that they can be selectively opened using laser drilling or laser cutting.

10. The laser machining support according to one of the preceding claims, **characterized in that** said channels (3) are provided between a plurality of rod-shaped or tube-shaped spacer elements (9) arranged at a distance from one another.

11. The laser machining support according to one of the preceding claims, **characterized in that** said channels (3) extend through said support element (2) like a raster or grid.

12. The laser machining support according to one of the preceding claims, **characterized in that** it is at least partially manufactured using an additive manufacturing method.

13. A method for machining a piece of material (5), comprising the steps of:
- providing a laser machining support (1) including a support element (2) having a support surface (2.1) and a plurality of channels (3) formed below said support surface (2.1), wherein a material region located above said channels (3) and the portion of said support element (2) having said channels (3) are formed integrally from a piece of material;
- machining said support element (2) by means of a laser machining process in order to create at least a first machining contour (SK1) in said support surface (2.1);
- depositing a piece of material (5) on said support surface (2.1) such that said piece of material (5) covers the at least one first machining contour (SK1);
- machining said piece of material (5) by means of a laser machining process to create a workpiece (6) having a second machining contour (SK2), wherein the first machining contour (SK1) formed in said support surface (2.1) corresponds to the second machining contour (SK2) at least in terms of shape and the second machining contour (SK2) comes to superpose the first machining contour (SK1) congruently, wherein a process gas, which is applied during laser machining, is discharged via said channels during the laser machining process;
- removing said workpiece (6) from said support surface (2.1) of said support element (2).

14. The method according to claim 13, **characterized in that** the laser cutting support (1) is temperature-controlled by passing a cooling fluid through a cooling channel (4).

15. The method according to claim 13 or 14, **characterized in that**, before depositing a piece of material (5) on said support surface (2.1), at least one suction channel (11), via which said piece of material (5) can be subjected to negative pressure, is opened towards said support surface (2.1) by means of a laser machining process.

## Revendications

1. Support pour usinage au laser, comprenant un élément de support (2) ayant une surface de support (2.1), l'élément de support (2) étant formé d'un matériau apte à être usiné au moyen d'un rayonnement laser, et une pluralité de canaux (3) étant prévue en dessous de la surface de support (2.1) de telle sorte que la surface de support (2.1) au-dessus des canaux (3) est formée par une zone de matériau qui referme les canaux (3), la zone de matériau étant conçue pour être partiellement découpée au moyen d'un outil d'usinage au laser afin de former des renfoncements s'étendant jusque dans les canaux (3), les canaux (3) étant conçus pour évacuer un gaz de traitement utilisé lors de la fabrication d'une pièce à usiner (6) à partir d'une pièce de matériau (5) placée sur la surface de support (2.1),
**caractérisé en ce que** les canaux (3) sont prévus en dessous de la surface de support (2.1) dans l'élément de support (2), et
**en ce que** la zone de matériau située au-dessus des canaux (3) et la portion de l'élément de support (2) pourvue des canaux (3) sont réalisées d'un seul tenant à partir d'une pièce de matériau.

2. Support pour usinage au laser selon la revendication 1,
**caractérisé en ce que** les canaux (3) s'étendent parallèlement ou sensiblement parallèlement à la surface de support (2.1).

3. Support pour usinage au laser selon la revendication 1 ou 2,
**caractérisé en ce qu'**une pluralité de canaux (3) sont disposés à distance les uns des autres le long d'une première surface latérale (2.2) de l'élément de support, et
**en ce que** les canaux traversent l'élément de support dans une direction transversale à cette première surface latérale (2.2).

4. Support pour usinage au laser selon l'une des revendications précédentes,
**caractérisé en ce que** les canaux (3) sont formés par des alésages qui sont ouverts vers au moins une surface latérale de l'élément de support (2).

5. Support pour usinage au laser selon l'une des revendications précédentes,
**caractérisé en ce que** les canaux (3) sont disposés en dessous de la surface de support (2.1) à une distance (d) comprise entre 1 mm et 5 mm, de préférence entre 2 mm et 3 mm.

6. Support pour usinage au laser selon l'une des revendications précédentes,
**caractérisé en ce qu'**au moins un canal de refroidissement (4) est formé dans l'élément de support (2), lequel est conçu pour le passage d'un fluide de thermorégulation.

7. Support pour usinage au laser selon l'une des revendications précédentes,
**caractérisé en ce que** le support pour usinage au laser présente au moins un canal ou une chambre (8) qui est conçu(e) pour être soumis(e) à une dépression.

8. Support pour usinage au laser selon la revendication 7,
**caractérisé en ce qu'**il est prévu des canaux d'aspiration (11) qui s'étendent depuis le canal ou la chambre (8) en direction de la surface de support (2.1) et se terminent au niveau de la surface de support (2.1) par des ouvertures d'aspiration (12).

9. Support pour usinage au laser selon la revendication 7,
**caractérisé en ce qu'**il est prévu des canaux d'aspiration (11) qui s'étendent depuis le canal ou la chambre (8) en direction de la surface de support (2.1) et qui sont fermés dans la zone de la surface de support (2.1) de manière à pouvoir être ouverts sélectivement par perçage au laser ou par découpe au laser.

10. Support pour usinage au laser selon l'une des revendications précédentes,
**caractérisée en ce que** les canaux (3) sont prévus entre une pluralité d'éléments d'écartement (9) en forme de barre ou de tube, disposés à distance les uns des autres.

11. Support pour usinage au laser selon l'une des revendications précédentes,
**caractérisée en ce que** les canaux (3) traversent l'élément de support (2) à la manière d'un quadrillage ou d'une grille.

12. Support pour usinage au laser selon l'une des revendications précédentes,
**caractérisé par** sa fabrication au moins partielle au moyen d'un procédé de fabrication additive.

13. Procédé d'usinage d'une pièce de matériau (5), comprenant les étapes suivantes consistant à :
- fournir un support pour usinage au laser (1) comprenant un élément de support (2) qui présente une surface de support (2.1) et une pluralité de canaux (3) formés en dessous de la surface de support (2.1), une zone de matériau située au-dessus des canaux (3) et la portion de l'élément de support (2) pourvue des canaux (3) étant réalisées d'un seul tenant à partir d'une pièce de matériau ;
- usiner l'élément de support (2) par un processus d'usinage au laser, afin de créer au moins un premier contour d'usinage (SK1) dans la surface de support (2.1) ;
- appliquer une pièce de matériau (5) sur la surface de support (2.1), de sorte que la pièce de matériau (5) recouvre ledit au moins un premier contour d'usinage (SK1) ;
- usiner la pièce de matériau (5) par un processus d'usinage au laser pour produire une pièce à usiner (6) avec un deuxième contour d'usinage (SK2), le premier contour d'usinage formé dans la surface de support (2.1)) correspondant au moins à la forme selon le deuxième contour d'usinage (SK2), et le deuxième contour d'usinage (SK2) venant se placer en coïncidence avec le premier contour d'usinage (SK1), sachant que, pendant le processus d'usinage au laser, un gaz de traitement appliqué pendant l'usinage au laser est évacué via les canaux ;
- retirer la pièce à usiner (6) de la surface de support (2.1) de l'élément de support (2).

14. Procédé selon la revendication 13,
**caractérisé en ce que** le support pour découpe au laser (1) est thermorégulé par un fluide de refroidissement passant à travers un canal de refroidissement (4).

15. Procédé selon l'une des revendications 13 ou 14,
**caractérisé en ce qu'**avant l'application d'une pièce de matériau (5) sur la surface de support (2.1), au moins un canal d'aspiration (11) permettant de soumettre la pièce de matériau (5) à une dépression est ouvert vers la surface de support (2.1) par un processus d'usinage au laser.
